# EUROPEAN PATENT APPLICATION

(11) **EP 0 571 919 A1**
(43) Date of publication of application: **01.12.1993**
(21) Application number: 93108351.3
(22) Date of filing: 24.05.1993
(51) Int. Cl.: H04L 27/01, H04L 25/03

(54) **Demodulating apparatus using transversal equalizer and decision feedback type equalizer**

(30) Priority: 25.05.1992 JP 131221/92
(71) Applicant: NEC CORPORATION, Tokyo (JP)
(72) Inventor: Mizoguchi, Shoichi, Minato-ku, Tokyo (JP)
(74) Representative: VOSSIUS & PARTNER

(57) **Abstract**

The demodulating apparatus comprises an IF band transversal filter as a forward equalizer, to which an IF band modulated signal is inputted, for equalizing leading (pre-cursor) component of intersymbol interference; a demodulator for receiving the output of the IF band transversal filter to extract a baseband signal; a baseband backward decision feedback equalizer, to which the output of the modulator is inputted, for equalizing lagging (post-cursor) component of intersymbol interference; a first control signal generating circuit for generating tap coefficients of the IF band transversal filter; and a second control signal generating circuit for generating tap coefficients of the decision feedback equalizer. This demodulating apparatus effects sufficient equalization even when severe deep selective fading occurs.

## Description

The present invention relates to a demodulating apparatus used for a digital radio communication system, and more particularly to a demodulating apparatus using an equalizer which removes intersymbol interference.

In a demodulating apparatus used for a digital radio communication system, it is very important to remove intersymbol interference interently occurring on a transmission path or signal processing in order to realize a digital communication system in practice. Therefore, to this end, a conventional demodulating apparatus includes a transversal equalizer operating in an intermediate frequency (IF) band before demodulation or a base band frequency band after demodulation.

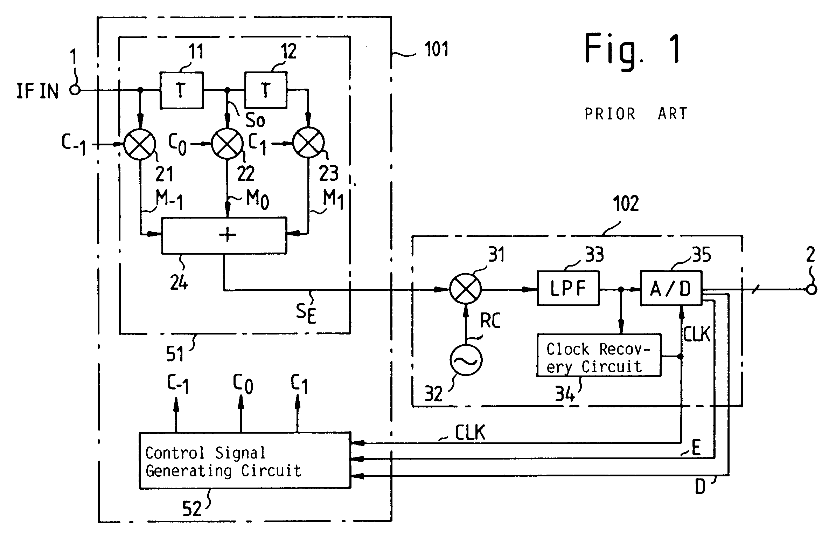

Fig. 1 shows a block diagram of a prior art demodulating apparatus using an IF band transversal equalizer. This figure comprises the IF band transversal equalizer 101 and a demodulator 102. In Fig. 1, an incoming IF modulated signal (a QAM signal or PSK signal is supplied through an input terminal 1 to a transversal filter 51 and a control signal generating circuit 52, and undergoes equalization of intersymbol interference. After this, the demodulator 120 reproduces a demodulated data signal through detection/discrimination process and outputs it to a terminal 2.

Next will be described the operation of the prior art demodulating apparatus shown in Fig. 1. First, the IF signal to be inputted is supplied to a first delay circuit 11, which gives a delay of T seconds (T is the time interval between symbols), and a first multiplier 21. The output signal S₀ of the first delay circuit 11 is supplied to a second delay circuit 12 (T second delay) and a second multiplier 22. The output of the second delay circuit 12 is supplied to a third multiplier 23. Here the multiplier 21 multiplies the inputted IF signal and a tap coefficient C₋₁ supplied from the control signal generating circuit 52, and a multiplication output M-1 is outputted to an adding circuit 24. Similarly, the multipliers 22 and 23 are supplied with tap coefficients C₀ and C₁, respectively, and multiplication outputs M0 and M1 are outputted to the adding circuit 24. The adding circuit 24 adds the output signals M-1, M0 and M1, and thus delivers an IF signal S_{E}, cleared of intersymbol interference. The IF signal S_{E} inputted to the demodulator 102 is supplied to a detector 31, and detected on the basis of a recovered carrier signal RC from a carrier recovery circuit 32 to generate a baseband output. This baseband signal, after being cleared of an unnecessary harmonic component by a low-pass filter 33 and undergoing wave shaping, is supplied to an A/D converter 35. Meanwhile, a clock signal CLK, recovered by a clock recovery circuit 34 on the basis of the baseband signal, is supplied to the A/D converter 35. The A/D converter 35, after sampling and quantizing the baseband signal at a sampling frequency f_{c} Hz (= 1/T), outputs a demodulated data signal to the terminal 2. Further, out of the output of the A/D converter 35, a polarity signal D representing the polarity of the input baseband signal and an error signal E representing the deviation direction of the signal from a reference point, are extracted. These signals D and E are supplied together with the clock signal CLK to the control signal generating signal 52. The control signal generating circuit 52, while taking the correlation and time average between the error signal E and the polarity signal D, generates the tap coefficients C₋₁, C₀ and C₁ for the multipliers 21, 22 and 23. Algorithm to generate these tap coefficients is called the zero forcing method. This method is well known and disclosed in, for instance, U.S.P. No. 5,173,925 and the Institute of Electronics and Communication Engineers, ed., "Digital Signal Processing" Chapter 11, p.234, published in 1975 Japan. The values of the tap coefficients are: if no intersymbol interference occurs, the main tap coefficient C₀ = 1 and other tap coefficients, C₋₁ = C₁ = 0.

However, the prior art demodulating apparatus having the transversal type equalizer has the disadvantage that, in the event of the occurrence of severe deep selective fading, it is incapable of effecting sufficient equalization, i.e., removing intersymbol interference because each tap input signal is either a receive signal itself or only a delayed receive signal and other tap input signals than the main tap signal for equalization are already significantly deteriorated by the fading.

It is therefore an object of the present invention to provide a demodulating apparatus capable of effecting sufficient equalization even when severe deep selective fading occurs.

A demodulating apparatus according to the present invention comprises an IF band transversal filter as a forward equalizer, to which an IF band modulated signal is inputted, for equalizing leading (pre-cursor) component of intersymbol interference; a demodulator for receiving the output of the IF band transversal filter to extract a baseband signal; a baseband backward decision feedback equalizer, to which the output of the modulator is inputted, for equalizing lagging (post-cursor) component of intersymbol interference; a first control signal generating circuit for generating tap coefficients of the IF band transversal filter; and a second control signal generating circuit for generating tap coefficients of the decision feedback equalizer.
Fig. 1 shows a block diagram of a prior art demodulating apparatus having an IF band transversal filter;

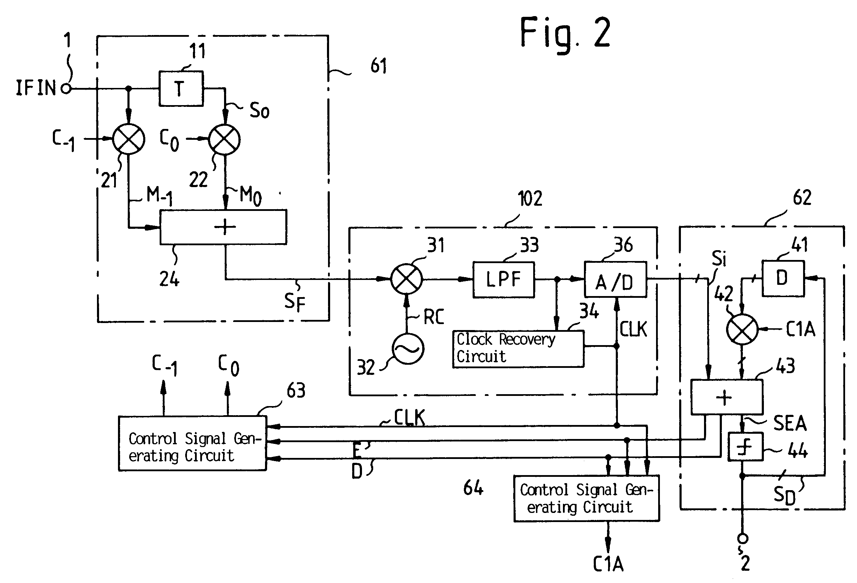

Fig. 2 shows a block diagram of an embodiment of the present invention;
Fig. 3 shows a circuit diagram of a control signal generating circuit for an IF band forward transversal filter contained in Fig. 2; and
Fig. 4 shows a circuit diagram of another control signal generating circuit for a decision feedback equalizer contained in Fig. 2.

Referring to Fig. 1, a demodulating apparatus according to the present invention comprises an IF band transversal filter 61, a demodulator 102 and a backward decision feedback equalizer 62. In FIG. 1, an IF input signal of a QAM signal or PSK signal is inputted through a terminal 1 to a first delay 11 having T second delay time (T seconds is the time interval between symbols), and to a first analog multiplier 21. The output signal S₀ of the first delay circuit 11 is supplied to a second analog multiplier 22. The IF signal inputted to the first multiplier 21 is multiplied by a tap coefficient C₋₁ generated by a control signal generating circuit 63, and the multiplied result is supplied to an analog adding circuit 24 as a multiplied result (prior tap output) M₋₁. Similarly, a main tap coefficient C₀ generated by the control signal generating circuit 63 is supplied to a multiplier 22, and the multiplied result (main tap output) M₀ is supplied to the adding circuit 24. The adding circuit 24 adds the output signals M₋₁ and M₀ of the multipliers 21 and 22. So as to equalize a pre-cursor component of intersymbol interference on the basis of a signal ahead of the main signal (forward equalization). The forward equalized IF signal s_{F} from the IF band transversal filter 61 is outputted to the demodulator 102. In the demodulator 102, the IF signal S_{F} is detected on the basis of a recovered carrier RC delivered from a carrier recovery circuit 32 and, thus, an analog baseband output is produced. This analog baseband signal, after being cleared of an unnecessary harmonic component and being wave-shaped by a low-pass filter 33, is supplied to an analog-to-digital (A/D) converter 36. A clock signal CLK recovered by a clock recovery circuit 34 is inputted to the A/D converter 36. The A/D converter 36 converts the baseband signal into a digital signal Sᵢ at a sampling frequency fc (Hz) (fc = 1/T) and outputs it to a decision feedback type backward equalizer 62. In the decision feedback type backward equalizer 62, the digital signal Sᵢ is supplied to a digital adder 43. To the digital adder 43 is also supplied the output signal of a digital multiplier 42 to equalize a post-cursor component of intersymbol interference due to a signal lagging behind the main signal, (delayed wave). The equalized digital signal S_{EA} delivered from the adder 43 is supplied to a decider 44. If the transmit baseband signal is an Nth power of 2, the decider 44 outputs N bits from the first bit (Most Significnnt Bit) to the Nth bit to an output terminal 2 as the equalized decision signal S_{D} and supplied to a second delay circuit 41. The delay time of the delay circuit 41 is so selected as to make the total delay time through the multiplier 42, the adder 43, the decider 44 and the delay circuit 41 to be T seconds. If the delay times of the multiplier 42, the adder 43 and the decider 44 are sufficiently smaller than T seconds, a flip-flop driven by the clock signal CLK may be used as the delay circuit 41. The output signal of the delay circuit 42 is supplied to the digital multiplier 42, and digitally multiplied by a tap coefficient C_{1A} generated by a second control signal generating circuit 64. The multiplied output digital signal is supplied to the digital adder 43 to deliver the equalized digital signal SEA. Described above operates as a backward equalizer of a decision feedback type.

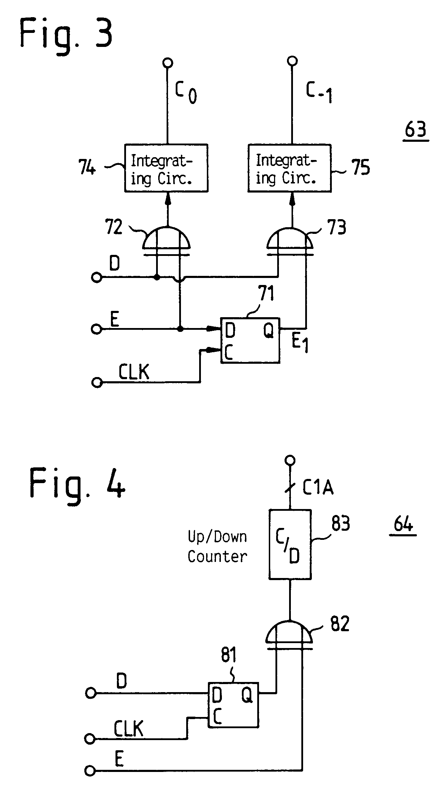

Next will be described the control signal generating circuits 63 and 64. Out of the output digital signal of the adder 43, the first bit signal is applied as a polarity signal D and the (N+1)th bit signal is applied to an error signal E. These polarity signal D and error signal E, together with the clock signal CLK, are supplied to the first control signal generating circuit 63 and the second control signal generating circuit 64 to generate the analog tap coefficients C₋₁ and C₀ and the digital tap coefficient C_{1A}, respectively. As illustrated in FIG. 3, in the control signal generating circuit 63, the error signal E is supplied to a flip-flop 71 to generate an error signal E₁ delayed by one bit, which is supplied to another exclusive OR circuit 73, and an exclusive OR circuit 72. On the other hand, the polarity signal D is supplied to the exclusive OR circuits 72 and 73. The outputs of the exclusive OR circuits 72 and 73 are respectively supplied to integrating circuits 74 and 75 for undergoing time averaging. Thus, the integrating circuits 74 and 75 deliver the analog tap coefficients C₀ and C₋₁. As illustrated in FIG. 4, in the control signal generating circuit 64, the polarity signal D is delayed by one bit by a flip-flop 81 and, after this, supplied together with the error signal E to an exclusive OR circuit 82. The output of the exclusive OR circuit 82 is representative of correlation between the polarity signal D and the error signal E, and supplied to an up-down counter 83. The counter 83 has function of time-averaging, and generates a tap coefficient C_{1A} consisting of an M-bit digital signal sequence. Here, the number of bits M representing the quantizing accuracy of tap coefficients is set sufficiently large to neglect arithmetic operation error to affect the equalization output. The method to generate these tap coefficients is well known as the zero forcing (ZF) algorithm.

The demodulating apparatus having the above-described configuration is significantly superior in equalizing capability to any conventional transversal type equalizer because, by using the signal SD resulting from a decision on the equalized signal as the tap input to the backward decision feedback equalizer 62 for equalizing delayed waves, intersymbol interference based on a successive delayed wave is eliminated by an equalized signal, even if severe deep selective, fading arises. Furthermore, while the application of baseband transversal filters to an orthogonal modulation system results in an orthogonal two-dimensional configuration and requires altogether four transversal filters, two transversal filters suffice in the case of the IF type, and the present invention according to which IF type forward filters are used, including the IF type forward transversal filter, provides a simple configuration than a baseband totally digital decision feedback equalizer in which all the taps are composed in the baseband.

As hitherto described, since the present invention provides the configuration in which the forward equalizer is composed of the IF band transversal filter and the backward equalizer is composed of baseband decision feedback type backward equalizer, there is the effects of affording a superior equalizing performance against fading distortion and simplifying the configuration compared with a configuration in which a baseband decision feedback equalizer is also applied to a forward equalizer.

## Claims

1. A demodulating apparatus for demodulating a modulated signal converted in an intermediate frequency band, comprising:
transversal filter means receiving said modulated signal for equalizing a leading component of intersymbol interference in an intermediate frequency band to deliver a forward equalized modulated signal;
detecting means for detecting said forward-equalized modulated signal for producing a baseband signal;
converter means for converting said baseband signal into a digitized baseband signal; and
decision feedback type equalizer for backward equalizing an lagging component of said digitized based band signal to deliver an equalized demodulated baseband signal.

2. A demodulating apparatus as claimed in claim 1, wherein said decision feedback type equalizer includes:
adder for adding said digitized baseband signal and a second digitized signal to deliver an added digitized signal;
decider receiving said added digitized signal for delivering most significant bits in said added digital signal as said equalized demodulated baseband signal;
delay means for delaying said equalized demodulated baseband signal by a predetermined delay time to deliver a delayed-digitized demodulated baseband signal; and
multiplier for multiplying said delayed-digitized demodulated baseband signal by a coefficient to deliver said second digitized signal.

3. A demodulating apparatus as claimed in claim 2, further comprising coefficient generating means for generating said coefficient in response to the most significant bit and the less significant bit in said added digitized signal delivered from said adder.
